# EUROPEAN PATENT SPECIFICATION

(11) **EP 3 083 340 B1**
(45) Date of publication and mention of the grant of the patent: **28.08.2019**
(21) Application number: 14836973.9
(22) Date of filing: 15.12.2014
(51) Int. Cl.: B60R 25/102, G08G 1/00, B60R 25/10

(54) **SAFETY APPARATUS FOR MOTOR VEHICLES OR THE LIKE**
SICHERHEITSVERPACKUNG FÜR MOTORFAHRZEUGE ODER DERGLEICHEN
APPAREIL DE SÉCURITÉ POUR DES VÉHICULES À MOTEUR OU ANALOGUES

(30) Priority: 20.12.2013 IT MO20130357
(43) Date of publication of application: 26.10.2016
(73) Proprietor: Meta System S.p.A., 42124 Reggio Emilia (IT)
(72) Inventor: SIMONAZZI, Giuseppe, I-42123 Reggio Emilia (IT)
(74) Representative: Brunacci, Marco
(86) International application number: PCT/IB2014/066904
(87) International publication number: WO 2015/092645

(56) References cited:
- EP-A2- 2 268 507
- DE-U1-202013 104 281

## Description

### Technical Field

The present invention relates to a safety apparatus for motor vehicles or the like, usable in particular for alarm signaling in case of insurance fraud or in case of attempted theft or unwanted intrusion into the motor vehicle.

### Background Art

Telematic appliances are known which, after being installed on board a vehicle, are able to determine the way the vehicle itself is used over time.

Such appliances find application, e.g., in the insurance field, for the determination of customized rates on the basis of the actual use of the vehicle or for the determination and subsequent assessment of sudden events, such as accidents involving the vehicle.

The appliances of known type generally comprise a control unit installable on board the vehicle, inside the passenger compartment, and connectable to the electronic system of the vehicle itself.

Such appliances also comprise a radio-wave device, of the type commonly used in the field of mobile phones such as, e.g., a GSM, GPRS, UMTS transceiver or the like.

The radio-wave device, in particular, supports the sending of information collected by the appliance towards a remote data storage and processing unit. Eventually, the radio-wave device is employed for receiving, from the remote unit, updates of the software controlling the appliance on board the vehicle. These appliances generally also comprise a satellite receiver, of the type of a GPS receiver or equivalent, which allows locating the vehicle using the detected coordinates of latitude, longitude and, possibly, altitude.

In practice, the operation of the appliance involves the collection, at regular time intervals, or following exceptional events such as, e.g., an accident or a sudden stop, of information relating to the vehicle position by means of the GPS receiver and the subsequent transmission of such information to the remote unit by means of the radio-wave device.

The information thus collected by the remote unit is then processed for the determination of useful data to the specific area of application.

Further information can be collected by the appliance through the use of additional devices such as, e.g., an accelerometer mounted on the vehicle and able to detect sudden accelerations and decelerations.

The accelerometer, e.g., can be employed in the insurance field to determine the dynamics of an accident and, therefore, the related responsibilities.

The document EP 2 268 507 A2, e.g. describes a safety apparatus for motor vehicles comprising a supporting element able to house a device for measuring the instantaneous acceleration of the motor vehicle, a communication unit, a location device and an electronic siren able to send an emergency signal in case of an accident of the motor vehicle detected by the acceleration measuring device.

The appliances of known type, nevertheless, are susceptible to improvements. In particular, one of the main objects of these appliances is undoubtedly to significantly reduce the possibility of tax fraud.

In fact, through the continuous communication with the remote unit for the exchange of data, such as those relating to the position, speed and acceleration of the vehicle, it is possible to trace continuously over time any event involving the vehicle itself, thus permitting a check of the actual use of the vehicle and, in particular, the detection and reconstruction of sudden events such as accidents. The use however is known of special devices for the disturbance of GSM, GPRS signals or other second and third generation mobile phone standards, which, if used in the proximity of a motor vehicle having such telematic appliance, allow to stop any signal to or from the appliance itself.

Such devices, in practice, emit a disturbance signal that operates within the frequency spectrum used by the mobile phone standards, and that, therefore, is superimposed to the alarm signal transmitted by the communication device of the anti-theft system.

In this way, therefore, it is possible to black out the communications between the appliance installed on board the vehicle and the remote unit in order to encourage insurance fraud or theft.

Document DE 20 2013 104281 U1 discloses a theft protection system for vehicles comprising and a GSM/GPRS module which is connected to a control device in order to send text messages and/or calls to a telephone of the vehicle owner and/or a control center. A control server is operatively connected to the GSM/GPRS module and it is set in order to send SMS messages and/or alarm calls to the phone of the vehicle owner and/or to the control center when a predefined time interval between two successive calls of the GSM/GPRS module is exceeded.

### Description of the Invention

The main aim of the present invention is to devise a safety apparatus for motor vehicles or the like capable of reducing the risk of insurance fraud or theft.

Another object of the present invention is to devise a safety apparatus for motor vehicles or the like which allows to achieve the above mentioned improvements of the prior art in the ambit of a simple, rational, easy and effective to use as well as affordable solution.

The above mentioned objects are achieved by the present safety apparatus for motor vehicles or the like according to claim 1.

### Brief Description of the Drawings

Other characteristics and advantages of the present invention will become better evident from the description of a preferred, but not exclusive, embodiment of a safety apparatus for motor vehicles or the like, illustrated by way of an indicative, but not limitative example in the accompanying drawings, in which:

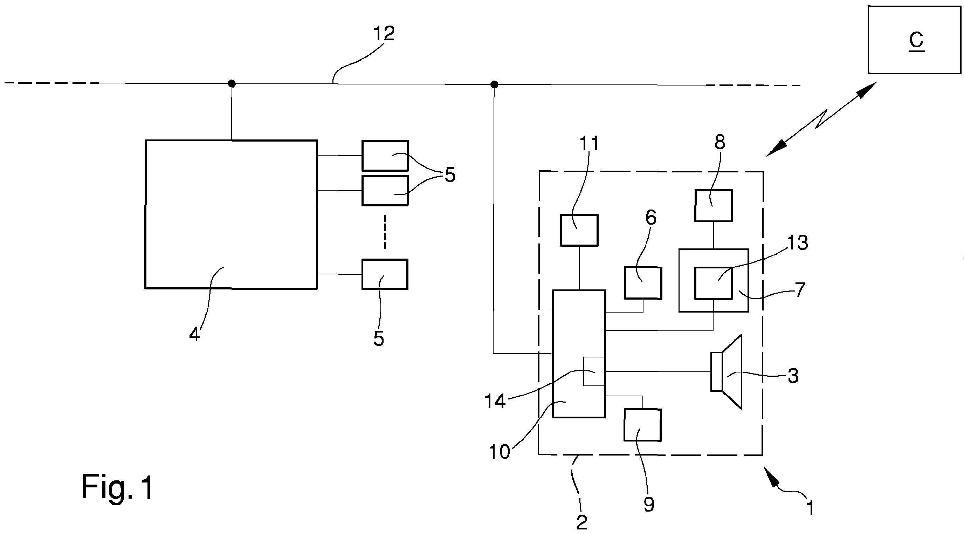

Figure 1 is a general functional diagram of the appliance according to the invention.

### Embodiments of the Invention

With particular reference to these figures, reference numeral 1 globally designates a safety apparatus usable in particular for alarm signaling in case of insurance fraud or in case of attempted theft or unwanted intrusion into the motor vehicle.

The apparatus 1 comprises a supporting body, schematized in the illustration by reference 2, made up of a substantially box-shaped container body and fixable onto a motor vehicle by means of suitable fastening means, not illustrated in the figures.

For example, the fastening means can be made up of suitable brackets, adhesives means or other fastening systems.

In particular, the container body 2 is fixable in correspondence with a substantially protected position of the motor vehicle, such as e.g. the engine compartment, in order to make difficult the unwanted access and tampering of the apparatus 1 and to ensure the protection of the device itself following any impact of the motor vehicle.

Different positions of the container body 2 can include, e.g., its fastening in correspondence with one of the wheelhouses of the motor vehicle.

Advantageously, the apparatus 1 comprises an electronic siren 3 able to emit an alarm acoustic signal.

The electronic siren 3 is housed within the container body 2.

With reference to a possible embodiment of the apparatus 1, the electronic siren 3 can be associated with a control unit 4 on the motor vehicle, which can be made up of a conventional control unit of an anti-theft/anti-intrusion system positioned within the internal compartment of the motor vehicle itself.

The control unit 4 can be associated, e.g., with a plurality of detection sensors 5 installed on board the motor vehicle of the type of ultrasonic sensors or the like able to detect any intrusion inside the internal compartment of the motor vehicle.

Inside the container body 2, the apparatus 1 comprises a device for measuring the instantaneous acceleration of the motor vehicle, indicated generally in the illustrations by the reference 6.

The acceleration measuring device 6 can be used to determine the driving style of the motor vehicle's driver and to detect any accident of the motor vehicle, as well as to collect useful information in order to reconstruct the dynamics and the intensity of the impacts.

Usefully, the acceleration measuring device 6 can be used to determine the variations in the inclination of the motor vehicle in the event of any attempted theft by means of lifting.

In particular, the acceleration measuring device 6 is suitable for measuring the instantaneous acceleration/deceleration of the motor vehicle along three directions substantially orthogonal and, in particular, can be composed of one or more three-axis accelerometers.

Conveniently, the arrangement of the three acceleration/deceleration measurement directions with respect to the motor vehicle is not relevant to the proper operation of the accelerometer 6.

This allows great freedom of positioning the accelerometer 6, and therefore the entire apparatus 1, during installation on the motor vehicle, while ensuring at the same time the detection of variations in inclination along any direction in a reliable and safe manner.

This frees, therefore, the positioning of the apparatus 1 from any mechanical limits of the housing inside the engine compartment of the motor vehicle or in other housing sites on the vehicle, by greatly simplifying installation.

Within the container body 2 is also housed a communication unit, generally designated in the illustrations by reference 7, associated with the accelerometer 6 and able to communicate with a remote unit C.

In particular, the communication unit 7 comprises a transmitter and, possibly, a receiver operating in the frequency spectrum with mobile phone protocols of the GSM, GPRS, UMTS type or the like.

The communication unit 7 is used for the communication to the remote unit C of useful information for insurance purposes, such as information relating to the vehicle position and to the vehicle instantaneous acceleration, as well as for sending signals of different type, such as alarm signals in case of theft of the vehicle.

Furthermore, in case of accident detected by the accelerometer 6, the communication unit 7 is able to send an emergency signal by activating a call to one or more predefined telephone numbers such as, e.g., private numbers or emergency numbers of medical staff, police or otherwise.

The presence of an internal antenna 8 associated with the communication unit 7 makes the apparatus 1 largely autonomous in the management of communications.

Conveniently, the apparatus 1 can have at least a storage unit 9 able to store the software controlling the apparatus itself or data such as, e.g., the predefined telephone numbers to call in case of emergency.

The apparatus 1 comprises an electronic control unit 10, the type of a microprocessor or the like, connected to the accelerometer 6, to the communication unit 7, to the electronic siren 3 and to the storage unit 9. The electronic control unit 10 is achievable, e.g., on a printed circuit board placed and fixed within the container body 2.

The electronic control unit 10 is possibly connectable to the control unit 4 on the motor vehicle and is able to coordinate the operation of the accelerometer 6 with that of the communication unit 7, as well as to activate the electronic siren 3 upon signaling of the control unit 4.

Advantageously, the apparatus 1 comprises a location device 11 for locating the position of the motor vehicle. The location device 11 is also housed within the container body 2.

In particular, the location device 11 can be made up of a satellite signal receiver and of a Global Positioning System (GPS), Galileo Positioning System satellite navigation system or the like, installed on board the vehicle.

The position of the motor vehicle detected by the location device 11 is sent together with the other information from the communication unit 7 to the remote unit C, in order to monitor the movements of the motor vehicle and any sudden events for insurance purposes, to reveal the position of the motor vehicle and to allow the intervention of assistance/aid quickly in the event of an accident, or even to signal the position of the motor vehicle in case of theft or attempted theft.

Conveniently, the apparatus 1, in particular the electronic control unit 10, can be connected to the control unit 4 and to other devices that can be present on the motor vehicle by means of a communication channel 12.

Conveniently, the communication channel 12 is preferably made up of the conventional CAN (Controller Area Network) channel already present on the vehicle. This avoids the installation of additional conductor cables, thus simplifying the installation operations of the apparatus 1.

The connection of the apparatus 1 by means of a channel 12 of different type cannot however be ruled out.

In addition the apparatus 1 can have a connection port able to allow the connection to the communication channel 12 and, therefore, to the control unit 4.

Conveniently, such connection port is made up of a conventional connector, of the type normally present on the known electric sirens and used in anti-theft or intrusion detection systems for motor vehicles.

In the event of an anti-theft/intrusion detection system being already present on the motor vehicle, this allows for the installation of the apparatus 1 by simply replacing the conventional electric siren already installed.

The apparatus 1 can be powered directly from the battery of the motor vehicle or, alternatively, it can have a power supply internal battery which ensures the correct operation even in case of accident.

Advantageously, the apparatus 1 also comprises check means able to periodically check the presence of the radiofrequency communication between the communication unit 7 and the remote unit C, illustrated schematically in Figure 1 and globally indicated by reference 13.

The check means 13 are connected to the electronic control unit 10 and are able to send an alarm signal to the electronic control unit 10 in the event of a forced interruption of the radiofrequency communication being detected between the communication unit 7 and the remote unit C.

Specifically, by forced interruption is meant an interruption of the radiofrequency communication due, e.g., to the use of special devices for the disturbance of GSM signals or other mobile phone standards, devices usable generally to avoid the sending of alarm signals during the theft of a motor vehicle. These devices, in fact, emit a blinding signal operating within the frequency spectrum used by the mobile phone standards and that, therefore, is superimposed to the signals transmitted or received by the communication unit 7.

Preferably, the check means 13 are made integral inside the communication unit 7 itself.

The check means 13 can be made up of a special piece of hardware and/or software program. For example, the same modem which constitutes the communication unit 7 can detect the blinding of the radiofrequency signal and to communicate such blinding by means of an alarm signal on a predefined output pin.

The apparatus 1 also comprises activation means 14 operatively connected to the check means 13 and to the electronic siren 3 and able to activate the electronic siren itself in case of a forced interruption in the radiofrequency communication being detected between the communication unit 7 and the remote unit C.

Preferably, the activation means 14 are made integral inside the electronic control unit 10.

In particular, the activation means 14 can be made up of a specific software program stored within the storage unit 9 and processed by the electronic control unit 10.

It is found in practice how the described invention achieves the intended objects.

In particular, the fact is underlined that the apparatus according to the invention is able to reduce the risk of insurance fraud or theft.

In fact, in the event of special devices being used for the disturbance of radiofrequency communication between the communication unit and the remote unit, the check means of the apparatus detect such attempt and the activation means activates the electronic siren, thus signaling the attempt to blinding the signal.

In this way, therefore, it is possible to significantly reduce insurance fraud or theft of the motor vehicle.

Additionally, by positioning all components of the apparatus within a single housing container body the risk of tampering or, even, of malfunctions due to the occurrence of an accident is considerably reduced.

## Claims

1. Safety apparatus (1) for motor vehicles, comprising at least a supporting body (2) associable with a motor vehicle, at least an acceleration measuring device (6) associated with said supporting body (2) and able to measure the instantaneous acceleration of said motor vehicle along at least one direction, at least one communication unit (7) associated with said supporting body (2) and able to set up a radiofrequency communication with at least a remote unit (C), at least a location device (11) associated with said supporting body and able to locate the position of said motor vehicle, at least an electronic siren (3) associated with said supporting body (2) and able to emit an alarm acoustic signal, **characterised by** the fact that it comprises check means (13) configured for periodically checking the presence of said radiofrequency communication between said communication unit (7) and said remote unit (C), and activation means (14) operatively connected to said check means (13) and to said electronic siren (3), wherein said check means (13) are configured for sending at least an alarm signal to said activation means (14) if said radiofrequency communication between said communication unit (7) and said remote unit (C) is interrupted, and wherein said activation means (14) are configured for activating said electronic siren (3) if said check means (13) detect a forced interruption of said radiofrequency communication, and wherein said supporting body (2) is made up of a substantially box-shaped container body (2) which can be fixed on said motor vehicle and which houses at least said acceleration measuring device (6), said communication unit (7), said location device (11), said electronic siren (3), said check means (13) and said activation means (14), wherein said check means (13) are made integral inside said communication unit (7), wherein said safety apparatus (1) comprises at least an antenna (8) operatively connected to said communication unit (7) and associated with said supporting body (2) or housed inside said container body (2), and wherein said safety apparatus (1) comprises at least a power supply internal battery.

2. Apparatus (1) according to claim 1, **characterized by** the fact that it comprises at least an electronic control unit (10) associable with at least one of said acceleration measuring device (6), said communication unit (7), said location device (11), said electronic siren (3), said check means (13) and said activation means (14).

3. Apparatus (1) according to one or more of the preceding claims, **characterized by** the fact that said electronic control unit (10) is operatively associable with at least a control unit (4) on said motor vehicle.

## Patentansprüche

1. Sicherheitsvorrichtung (1) für Kraftfahrzeuge, umfassend mindestens einen Tragkörper (2), der einem Kraftfahrzeug zugeordnet werden kann, mindestens eine Beschleunigungsmessvorrichtung (6), die dem Tragkörper (2) zugeordnet ist und die in der Lage ist, die momentane Beschleunigung des Kraftfahrzeugs entlang mindestens einer Richtung zu messen, mindestens eine Kommunikationseinheit (7), die dem Tragkörper (2) zugeordnet ist und in der Lage ist, eine Funkfrequenzverbindung mit mindestens einer entfernten Einheit (C) aufzubauen, mindestens eine Ortungsvorrichtung (11), die dem Tragkörper zugeordnet ist und in der Lage ist, die Position des Kraftfahrzeugs zu lokalisieren, mindestens eine elektronische Sirene (3), die dem Tragkörper (2) zugeordnet ist und in der Lage ist, ein akustisches Alarmsignal auszusenden, **dadurch gekennzeichnet, dass** sie Prüfmittel (13) umfasst, die zum periodischen Überprüfen des Vorhandenseins der Funkfrequenzverbindung zwischen der Kommunikationseinheit (7) und der entfernten Einheit (C) konfiguriert sind, und Aktivierungsmittel (14), die funktionsfähig mit den Prüfmitteln (13) und der elektronischen Sirene (3) verbunden sind, wobei die Prüfmittel (13) konfiguriert sind, um mindestens ein Alarmsignal an die Aktivierungsmittel (14) zu senden, wenn die Funkfrequenzverbindungzwischen der Kommunikationseinheit (7) und der entfernten Einheit (C) unterbrochen ist, und wobei die Aktivierungsmittel (14) konfiguriert sind, um die elektronische Sirene (3) zu aktivieren, wenn die Prüfmittel (13) eine erzwungene Unterbrechung der Funkfrequenzverbindung detektieren, und wobei der Trägerkörper (2) aus einem im Wesentlichen kastenförmigen Behälterkörper (2) besteht, der an dem Kraftfahrzeug befestigt werden kann und der mindestens die Beschleunigungsmessvorrichtung (6), die Kommunikationseinheit (7), die Ortungsvorrichtung (11), die elektronische Sirene (3), die Prüfmittel (13) und die Aktivierungsmittel (14) beherbergt, wobei die Prüfmittel (13) innerhalb der Kommunikationseinheit (7) integriert sind, wobei die Sicherheitsvorrichtung (1) mindestens eine Antenne (8) umfasst, die funktionsfähig mit der Kommunikationseinheit (7) verbunden und dem Trägerkörper (2) zugeordnet oder in dem Behälterkörper (2) untergebracht ist, und wobei die Sicherheitsvorrichtung (1) mindestens eine interne Batterie zur Stromversorgung umfasst.

2. Vorrichtung (1) nach Anspruch 1, **dadurch gekennzeichnet, dass** sie mindestens eine elektronische Steuereinheit (10) umfasst, die mit mindestens einer der Beschleunigungsmessvorrichtung (6), der Kommunikationseinheit (7), der Ortungsvorrichtung (11), der elektronischen Sirene (3), den Prüfmitteln (13) und den Aktivierungsmitteln (14) assoziierbar ist.

3. Vorrichtung (1) nach einem oder mehreren der vorstehenden Ansprüche, **dadurch gekennzeichnet, dass** die elektronische Steuereinheit (10) mit mindestens einer Steuereinheit (4) an dem Kraftfahrzeug funktionsfähig verbunden ist.

## Revendications

1. Appareil de sécurité (1) pour des véhicules motorisés, comprenant au moins un corps de support (2) pouvant être associé à un véhicule motorisé, au moins un dispositif de mesure d'accélération (6) associé audit corps de support (2) et capable de mesurer l'accélération instantanée dudit véhicule motorisé suivant au moins une direction, au moins une unité de communication (7) associée audit corps de support (2) et capable d'établir une communication par radiofréquences avec au moins une unité distante (C), au moins un dispositif de localisation (11) associé audit corps de support et capable de localiser la position dudit véhicule motorisé, au moins une sirène électronique (3) associée audit corps de support (2) et capable d'émettre un signal acoustique d'alarme, **caractérisé par le fait qu'**il comprend des moyens de vérification (13) configurés pour vérifier périodiquement la présence de ladite communication par radiofréquences entre ladite unité de communication (7) et ladite unité distante (C), et des moyens d'activation (14) connectés opérationnellement auxdits moyens de vérification (13) et à ladite sirène électronique (3), dans lequel lesdits moyens de vérification (13) sont configurés pour envoyer au moins un signal d'alarme auxdits moyens d'activation (14) si ladite communication par radiofréquences entre ladite unité de communication (7) et ladite unité distante (C) est interrompue, et dans lequel lesdits moyens d'activation (14) sont configurés pour activer ladite sirène électronique (3) si lesdits moyens de vérification (13) détectent une interruption forcée de ladite communication par radiofréquences, et dans lequel ledit corps de support (2) est constitué d'un corps de contenant (2) sensiblement en forme de boîte qui peut être fixé sur ledit véhicule motorisé et qui loge au moins ledit dispositif de mesure d'accélération (6), ladite unité de communication (7), ledit dispositif de localisation (11), ladite sirène électronique (3), lesdits moyens de vérification (13) et lesdits moyens d'activation (14), dans lequel lesdits moyens de vérification (13) sont réalisés d'une seule pièce à l'intérieur de ladite unité de communication (7), dans lequel ledit appareil de sécurité (1) comprend au moins une antenne (8) connectée opérationnellement à ladite unité de communication (7) et associée audit corps de support (2) ou logée à l'intérieur dudit corps de contenant (2), et dans lequel ledit appareil de sécurité (1) comprend au moins une batterie interne d'alimentation électrique.

2. Appareil (1) selon la revendication 1, **caractérisé par le fait qu'**il comprend au moins une unité de commande électronique (10) pouvant être associée à au moins l'un dudit dispositif de mesure d'accélération (6), de ladite unité de communication (7), dudit dispositif de localisation (11), de ladite sirène électronique (3), desdits moyens de vérification (13) et desdits moyens d'activation (14).

3. Appareil (1) selon une ou plusieurs des revendications précédentes, **caractérisé par le fait que** ladite unité de commande électronique (10) peut être associée opérationnellement à au moins une unité de commande (4) sur ledit véhicule motorisé.
